# EUROPÄISCHE PATENTSCHRIFT

(11) **EP 1 687 681 B1**
(45) Veröffentlichungstag und Bekanntmachung des Hinweises auf die Patenterteilung: **18.08.2010**
(21) Anmeldenummer: 04803306.2
(22) Anmeldetag: 26.11.2004
(51) Int. Cl.: G05B 19/048, H04L 12/26

(54) **VERFAHREN ZUM BETREIBEN EINES NETZWERKS**
METHOD FOR OPERATING A NETWORK
Méthode d'opération d'un réseau

(30) Priorität: 27.11.2003 DE 10356118; 15.11.2004 DE 102004055053
(43) Veröffentlichungstag der Anmeldung: 09.08.2006
(73) Patentinhaber: SIEMENS AKTIENGESELLSCHAFT, 80333 München (DE)
(72) Erfinder: FEHRMANN, Holger, 39114 Magdeburg (DE); GEIGER, Friedhelm, 76228 Karlsruhe (DE); HAMMER, Gerhard, 76777 Neupotz (DE); RÖTHER, Klaus, 76297 Stutensee (DE)
(86) Internationale Anmeldenummer: PCT/EP2004/013455
(87) Internationale Veröffentlichungsnummer: WO 2005/053221

(56) Entgegenhaltungen:
- EP-A- 0 551 114
- DE-A1- 10 207 529
- DE-A1- 19 916 894
- DE-A1- 19 942 937

## Beschreibung

Die Erfindung betrifft ein Verfahren zum Betreiben eines Netzwerks, insbesondere eines PROFIBUS PA-Netzwerks, mit Redundanzeigenschaften nach dem Oberbegriff des Anspruchs 1.

In automatisierungstechnischen Anlagen der Fertigungs- oder Verfahrenstechnik mit "klassischer" Verdrahtung von Feldgeräten, beispielsweise Messumformern und/oder Stellgliedern, bei welchen die Feldgeräte über vieladrige Stammkabel und Unterverteiler jeweils durch ein eigenes Adernpaar mit einem Automatisierungsgerät verbunden sind, hat der Ausfall eines der Feldgeräte oder einer Übertragungsstrecke zu diesem Feldgerät keine Auswirkungen auf die Funktion anderer Feldgeräte, da die einzelnen Feldgeräte physikalisch voneinander getrennt betrieben werden.

Bei Feldgeräten, die über einen Feldbus mit dem Automatisierungsgerät kommunizieren, bildet das Buskabel eine für alle Feldgeräte gemeinsame Komponente, deren Ausfall Auswirkungen auf alle Feldgeräte hat. Darüber hinaus können Fehler in den Feldgeräten, z. B. ein Kurzschluss der Übertragungsleitung oder ein Aussenden von Störsignalen auf die Übertragungsleitung, die Kommunikation der übrigen an dem Buskabel angeschlossenen Feldgeräte beeinträchtigen. Wegen der dadurch möglicherweise reduzierten Systemverfügbarkeit werden Feldbusse in besonders kritischen Anwendungen nicht eingesetzt oder müssen redundant ausgelegt werden.

Prinzipiell muss zwischen zwei verschiedenen Redundanzkonzepten bei automatisierungstechnischen Anlagen unterschieden werden. Die Systemredundanz zum einen verbessert die Verfügbarkeit durch einen redundanten, d. h. weitgehend doppelten Aufbau des kompletten Systems, bestehend aus Feldgeräten, Bussystemen und Automatisierungsgeräten. Die Koordination, d. h. welche der Komponenten gerade aktiv betrieben werden und welche sich im Standby-Betrieb befinden, erfolgt auf der Ebene des Automatisierungsgeräts, das dafür ausgelegt sein muss. Alle anderen Komponenten sind Standardkomponenten. Das andere Konzept ist die Medienredundanz, bei welcher mit den Übertragungsmedien nur der Teil des Kommunikationssystems redundant ausgelegt wird, dessen Ausfall besonders gravierende Auswirkungen auf die Systemverfügbarkeit hat. Beispielsweise ist aus der EP 0 287 992 B2 ein hochverfügbares Bussystem bekannt, das zwei Busleitungen aufweist, über die jeweils identische Nachrichten seriell übertragen werden. Mit einer Detektierlogik, die sich in den angeschlossenen Teilnehmern befindet, werden zur Funktionsprüfung der Busse Prüfzeichen ausgewertet. Bei fehlerhaften Prüfzeichen wird auf den Empfang von der jeweils anderen, fehlerfreien Busleitung umgeschaltet. Durch die redundante Auslegung des Übertragungsmediums wird somit die Verfügbarkeit des Bussystems erhöht.

Aus der EP 1 062 787 B1 ist ein Ethernet-Netzwerk mit Redundanzeigenschaften bekannt. Das Ethernet-Netzwerk hat eine linienförmige Topologie. Die Linienenden sind an einem Redundanzmanager angeschlossen. Der Redundanzmanager prüft durch Testtelegramme den Zustand des Netzwerks. Bei einer Unterbrechung des Netzwerks verbindet der Redundanzmanager die Linienenden und stellt damit eine Linienstruktur und die Betriebsbereitschaft des Netzwerks wieder her. Nachteilig ist dabei, dass die Testtelegramme, die durch den Redundanzmanager in die beiden Linienenden eingespeist werden, für das Netzwerk eine zusätzliche Netzlast darstellen und somit die Übertragungskapazität des Netzwerks verringern. Dieses Überwachungs- und Umschaltprinzip ist zudem nicht ohne Weiteres auf Bussysteme übertragbar, bei welchen zusätzlich zur Übertragung der Daten auch die zum Betrieb der an der Busleitung angeschlossenen Teilnehmergeräte erforderliche Energie über die Busleitung übertragen wird.

Der Erfindung liegt die Aufgabe zugrunde, ein Verfahren zum Betreiben eines Netzwerks, insbesondere eines PROFIBUS PA-Netzwerks, mit Redundanzeigenschaften zu schaffen, durch welches mit einfachen Mitteln eine Erhöhung der Verfügbarkeit des Netzwerks erreicht wird.

Die Aufgabe wird erfindungsgemäß gelöst durch das in Anspruch 1 angegebene Verfahren.

Die Erfindung hat den Vorteil, dass durch den Redundanzmanager vergleichsweise schnell ein Fehler im Netzwerk erkannt und behoben werden kann. Bei einer Unterbrechung oder einem Kurzschluss in einem Kabelsegment wird durch das daran angeschlossene Abzweigelement eines Teilnehmergeräts, welches im Gutfall die zum Betrieb der weiteren, hinter dem Segment befindlichen Teilnehmergeräte erforderliche Energie über das Segment weiterleiten sollte, keine Speisespannung auf dieses Segment geleitet bzw. die Weiterleitung einer Speisespannung auf dieses Segment abgebrochen. Damit erreicht die Speisespannung nicht mehr das jeweils andere Linienende, das am Redundanzmanager angeschlossen ist. Dies wird durch den Redundanzmanager erkannt, der kurze Zeit nach Feststellen des Fehlerzustandes auch in das andere Linienende die erforderliche Betriebsenergie einspeist. Das defekte Kabelsegment wird durch die beiden angrenzenden Abzweigelemente isoliert und das Netzwerk ist trotz des Fehlerfalls ohne längere Betriebsstörung weiterhin betriebsbereit. Die Kommunikation in dem Netzwerk wird also auch im Falle eines Fehlers aufrecht erhalten, ohne dass dadurch ein übergeordnetes Netz, insbesondere Leitsystem, an dem das Netzwerk angeschlossen ist, gestört oder auf sonstige Weise in Anspruch genommen wird.

Gegenüber dem aus der oben erwähnten EP 1 062 787 B1 bekannten Verfahren, bei welchem mit Testtelegrammen der Zustand des Netzwerks überprüft wird, hat die Erfindung den Vorteil, dass Fehler unmittelbar nach Auftreten detektierbar sind und nicht erst zu einem Zeitpunkt, zu welchem Testtelegramme durch das Netzwerk geschickt wurden. Die Reaktionszeit des bekannten Verfahrens könnte dadurch verbessert werden, dass die Häufigkeit der Testtelegramme erhöht wird, d. h. die Zykluszeit der Testtelegrammeinspeisung verkürzt wird. Das wäre jedoch mit dem Nachteil verbunden, dass die Testtelegramme eine erhebliche zusätzliche Netzlast darstellen würden. Dagegen wird in vorteilhafter Weise durch die Erfindung eine zusätzliche Belastung des Netzwerks mit Testtelegrammen vollständig vermieden.

Ein weiterer Vorteil ist darin zu sehen, dass der Redundanzmanager und die Abzweigelemente der vorliegenden Erfindung nicht am Datenverkehr im Sinne einer Datenverarbeitung teilnehmen müssen. Deshalb ist der Aufwand der Implementierung geringer, der Leistungsbedarf wird reduziert und die Verfügbarkeit wird aufgrund der geringeren Gerätekomplexität erhöht. Die Erweiterung eines bestehenden Netzwerks um Redundanzeigenschaften ist einfacher realisierbar.

Indem der Redundanzmanager und die Abzweigelemente jeweils mit einem Abschlussglied (Abschlusswiderstand) versehen sind, das in dem Fall, wenn sie sich in der jeweiligen Netzwerktopologie an einem Linienende befinden, zuschaltbar ist, wird in vorteilhafter Weise erreicht, dass die Signalübertragungseigenschaften der Übertragungsstrecke nach Topologieänderungen flexibel an die jeweils herrschende Topologie anpassbar sind und somit das Netzwerk auch für höhere Baudraten geeignet ist.

In vorteilhafter Weise wird eine besonders einfache Realisierung eines Abzweigelements erreicht, wenn dieses mit zumindest zwei Schaltern und mit einer Steuereinheit versehen ist, wobei durch die Steuereinheit die beiden Schalter derart einstellbar sind, dass das mit dem jeweiligen Abzweigelement an das Netzwerk angeschlossene Teilnehmergerät zu dem einen, zu dem anderen oder zu beiden Netzwerkanschlüssen des Abzweigelements zum Erhalt von Betriebsenergie und zur Datenübertragung durchverbindbar ist.

Vorteilhaft wird eine besonders einfache Prüfbarkeit eines an einem Abzweigelement angeschlossenen Kabels auf Kurzschluss oder Unterbrechung ermöglicht, wenn das Abzweigelement ein Widerstandsnetzwerk aufweist, in dem die Schalter angeordnet sind, und wenn die Schalter durch die Steuereinheit derart einstellbar sind, dass mit der Steuereinheit Strom und/oder Spannung des an dem einen oder dem anderen Netzwerkanschluss des Abzweigelements angeschlossenen Kabels überprüfbar sind.

Da die Schaltzeiten der Schalter nicht unendlich kurz sind, kann die an dem oder den Linienenden eingespeiste Betriebsenergie den Teilnehmergeräten im Fehlerfall nicht unterbrechungsfrei zur Verfügung gestellt werden. Zur Lösung dieses Problems weist zumindest eines, insbesondere aber jedes der Abzweigelemente einen Energiespeicher auf, der zumindest in dem fehlerfreien Zustand von der Speisespannung aufladbar ist; das Abzweigelement ist dazu ausgebildet ist, die an dem jeweils angeschlossenen Teilnehmergerät liegende Spannung zu erfassen und im Falle eines Spannungsdefizits den Energiespeicher an das Teilnehmergerät zu schalten.

Wie bereits erwähnt, besteht ein Vorteil der Erfindung darin, dass der Redundanzmanager und die Abzweigelemente nicht am Datenverkehr teilnehmen müssen. Ein Fehler, wie z. B. eine Unterbrechung oder ein Kurzschluss in einem Kabelsegment, kann daher ohne Weiteres von den beiden Abzweigelementen beiderseits des Fehlerortes lokal, z. B. über eine Leuchtdiode, angezeigt werden, jedoch kann der Redundanzmanager nur den Fehlerzustand, nicht aber den Fehlerort erkennen. Um zusätzlich auch den Fehlerort ermitteln zu können, weist der Redundanzmanager vorteilhafterweise Mittel aufweist, die den zeitlichen Verlauf der Spannung und/oder des Stromes an dem einen Linienende während des Weiterleitens der Speisespannung durch die einzelnen Abzweigelemente erfasst und daraus die Anzahl der Abzweigelemente bis zu dem Fehlerort ermittelt. Diese Information über den Fehlerort kann der Redundanzmanager anzeigen und/oder einem übergeordneten Leitsystem mitteilen, so dass zentral festgestellt werden kann, wo der Fehler aufgetreten und zu reparieren ist. Der Redundanzmanager verfügt daher auch vorzugsweise über eine Kommunikationsschnittstelle zum Anschluss und Datenaustausch mit einem übergeordneten Netz, in dem sich das Leitsystem befinden kann.

Durch Erfassen von Änderungen der Spannung und/oder des Stromes an mindestens einem der beiden Linienenden kann der Redundanzmanager Zustandsänderungen des Netzwerkes ermitteln und so feststellen, wenn ein Fehler repariert worden ist.

Um die Redundanz des erfindungsgemäßen Netzwerkes über den Redundanzmanager hinaus zu einem übergeordneten, beispielsweise ein Leitsystem enthaltenden, Netz zu erweitern, ist der Redundanzmanager vorzugsweise über mindestens zwei Segmentkoppler an mindestens zwei Kommunikationskanäle des übergeordneten redundanten Netzes anschließbar und ferner dazu ausgebildet, die Funktionalität der Segmentkoppler zu überwachen und in Abhängigkeit davon einen der Segmentkoppler zur Verbindung mit dem Netzwerk auszuwählen.

Anhand der Zeichnungen, in denen ein Ausführungsbeispiel der Erfindung dargestellt ist, werden im Folgenden die Erfindung sowie Ausgestaltungen und Vorteile näher erläutert. Es zeigen:
- Figur 1: ein Blockschaltbild eines Teils einer automatisie- rungstechnischen Anlage,
- Figur 2: ein Blockschaltbild eines Redundanzmanagers,
- Figur 3: ein Blockschaltbild eines Teils einer automatisie- rungstechnischen Anlage in einer zu Figur 1 alter- nativen Ausbildung,
- Figur 4: ein Blockschaltbild eines Abzweigelements,
- Figur 5: eine Zustandstabelle einer Steuereinheit eines Ab- zweigelements,
- Figur 6: ein der Zustandstabelle gemäß Figur 5 entsprechen- des Zustandsdiagramm und
- Figur 7: ein Prinzipschaltbild eines erweiterten Abzweig- elements.

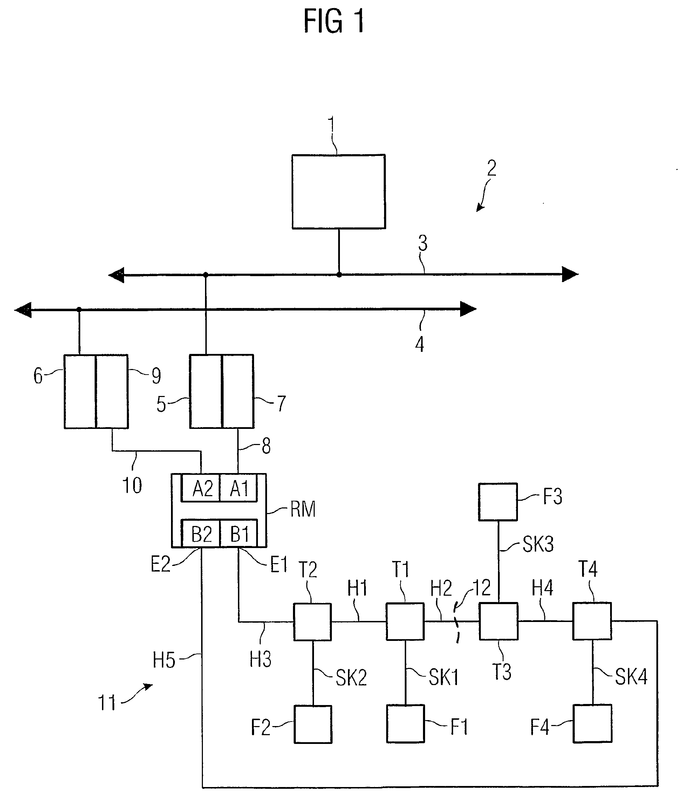

In Figur 1 ist ein Teil einer automatisierungstechnischen Anlage dargestellt. Ein Leitsystem 1 ist an einem Bussystem 2 nach der PROFIBUS DP-Spezifikation angeschlossen. Das Bussystem 2 kann einfach oder wie hier redundant ausgelegt sein. An jedem der beiden Kommunikationskanäle 3, 4 des Bussystems 2 ist neben anderen, hier nicht gezeigten, Geräten, wie z. B. Automatisierungsgeräten, jeweils ein Link 5 bzw. 6 angeschlossen. Der Link 5 ist mit einem Segmentkoppler 7 verbunden, der über ein Stichkabel 8 an einem Port A1 eines Redundanzmanagers RM angeschlossen ist. Der andere Link 6 ist mit einem weiteren Segmentkoppler 9 verbunden, der über ein weiteres Stichkabel 10 an einem Port A2 des Redundanzmanagers RM angeschlossen ist. An zwei weiteren Ports B1 und B2 des Redundanzmanagers RM ist ein Netzwerk 11 angeschlossen, das der PROFIBUS PA-Spezifikation genügt und eine linienförmige Topologie aufweist. Das eine Linienende E1 des Netzwerkes 11 wird von dem an dem Port B1 angeschlossenen Ende eines Hauptkabels H3 gebildet, das an seinem anderen Ende an einem Netzwerkanschluss eines Abzweigelements T2 angeschlossen ist. Das Abzweigelement T2 und weitere Abzweigelemente T1, T3, T4 dienen zum Anschluss von Feldgeräten F1, F2, F3, F4 als Teilnehmergeräte an dem Netzwerk 11. Dabei sind die Feldgeräte F1...F4 jeweils über Stichkabel SK1, SK2, SK3 bzw. SK4 an den jeweiligen Abzweigelementen T1...T4 angeschlossen.

Damit eine durchgängige Linie als Struktur des Netzwerks 11 erreicht wird, ist der andere Netzwerkanschluss des Abzweigelements T2 durch ein Hauptkabel H1 mit einem Netzwerkanschluss des Abzweigelements T1, der andere Netzwerkanschluss des Abzweigelements T1 durch ein Hauptkabel H2 mit einem Netzwerkanschluss des Abzweigelements T3 und der andere Netzwerkanschluss des Abzweigelements T3 durch ein Hauptkabel H4 mit einem Netzwerkanschluss des Abzweigelements T4 verbunden. Der andere Netzwerkanschluss des Abzweigelements T4 ist mit einem Hauptkabel H5 an dem Port B2 des Redundanzmanagers RM angeschlossen. Das an dem Port B2 befindliche Ende des Hauptkabels H5 stellt im fehlerfreien Fall ein zweites Linienende E2 des linienförmigen Netzwerks 11 linienförmigen dar.

Über die Hauptkabel H3, H1, H2 und H4 wird neben den Daten auch die Energie zum Betreiben der Feldgeräte F1...F4 übertragen. Hierzu enthält jeder der beiden Segmentkoppler 7, 9 jeweils eine Gleichspannungsquelle und speist einen Gleichstrom in die beiden Adern der zugehörigen Stichleitung 8 bzw. 10. Der Redundanzmanager RM wählt einen der beiden redundanten Segmentkoppler 7, 9 aus, hier z. B. den Segmentkoppler 7, und schaltet beim Hochfahren des Systems den betreffenden Port A1 direkt auf den Port B1 durch, so dass die vom Segmentkoppler 7 zur Verfügung gestellte Speisespannung auch am Port B1 anliegt. Im fehlerfreien Fall leiten die Abzweigelemente T1...T4 die auf dem jeweils einen Netzwerkanschluss ankommende Speisespannung auf den jeweils anderen Netzwerkanschluss weiter. Damit wird die Speisespannung sukzessive bis zum Linienende E2, das sich am Port B2 des Redundanzmanagers RM befindet, durchgeschaltet. Der Redundanzmanager RM überwacht die an seinem Port B2 ankommende Spannung. Entspricht diese nach einer von der Netzwerkkonfiguration abhängigen Verzögerungszeit nicht einem vorgegebenen Sollwert, so ist klar, dass ein Fehler im Netzwerk 11 vorliegt. Dies kann beispielsweise ein Kurzschluss oder eine Unterbrechung in einem der Hauptkabel H1...H5 sein.

Als Beispiel soll nun eine Unterbrechung des Hauptkabels H2 zwischen den Abzweigelementen T1 und T3 betrachtet werden, wie sie in Figur 1 durch eine durchbrochene Unterbrechungslinie 12 angedeutet ist. Eine derartige Unterbrechung wird durch das Abzweigelement T1 erkannt, das daraufhin die Speisespannung nicht weiterleitet, so dass diese die Abzweigelemente T3 und T4 sowie den Port B2 des Redundanzmanagers RM nicht mehr erreicht. Der Redundanzmanager RM erkennt das Ausbleiben der Speisespannung am Port B2 und legt daraufhin eine Spannung zur Versorgung der hinter der Fehlerstelle, d. h. im beschriebenen Fehlerbeispiel hinter der Unterbrechung 12, liegenden Feldgeräte F3 und F4 an seinen Port B2 an. Dies geschieht dadurch, dass er die Ports B1 und B2 und damit die Linienenden E1 und E2 miteinander verbindet. Die Versorgungsspannung wird vom Port B2 über das Abzweigelement T4 bis zum Abzweigelement T3 durchgeschaltet, das unmittelbar neben dem Fehlerort liegt, den Fehler 12 erkennt und daher die Versorgungsspannung nicht weiterleitet. Mit der Herstellung der Spannungsversorgung für alle Feldgeräte F1...F4 ist auch die Datenübertragung in dem Netzwerk 11 und damit ist der weitere Betrieb des Netzwerks 11 trotz des Fehlers 12 sichergestellt. Die beim Hochfahren des Netzwerks 11 beschriebene Verfahrensweise kann zusätzlich noch weitere Schritte enthalten, bei welchen zwischen den Abzweigelementen und dem Redundanzmanager und/oder in umgekehrter Richtung mit einem hier nicht näher beschriebenen Verfahren Daten ausgetauscht werden. Durch einen solchen Datenaustausch kann die Zuverlässigkeit des Netzwerks 11 erhöht und dessen Inbetriebnahme und die Fehlersuche zusätzlich erleichtert werden.

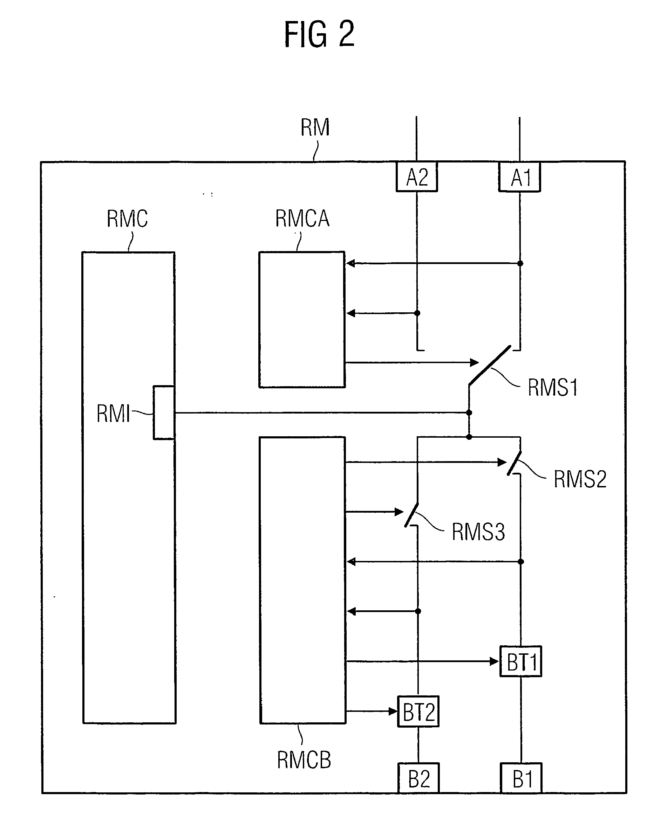

Der in Figur 2 beispielhaft gezeigte Redundanzmanager RM enthält eine den Ports A1 und A2 zugeordnete erste Steuereinheit RMCA, eine den Ports B1 und B2 zugeordnete zweite Steuereinheit RMCB und eine übergeordnete Steuerung RMC. Die Ports A1, A2, B1 und B2 sind über ein Schaltnetzwerk mit Schaltern RMS1, RMS2 und RMS3 miteinander verbunden, wobei der durch die erste Steuereinheit RMCA steuerbare Schalter RMS1 zur Auswahl eines der beiden Ports A1, A2 dient und die durch die zweite Steuereinheit RMCB steuerbaren Schalter RMS2 und RMS3 den jeweils ausgewählten Port A1 oder A2 entweder mit einem der beiden Ports B1 und B2, mit beiden Ports B1, B2 oder keinem der Ports B1 und B2 verbinden. Die Ports B1 und B2 verfügen über zu- und abschaltbare Abschlussglieder BT1, BT2 in Form von Abschlusswiderständen.

Die erste Steuereinheit RMCA überwacht die Ströme und/oder Spannungen an den Ports A1 und A2 und kann auf diese Weise die Segmentkoppler 7 und 9 (vgl. Figur 1) überwachen und im Fehlerfall die Umschaltung von dem einen, fehlerhaften Segmentkoppler auf den anderen auslösen. Die zweite Steuereinheit RMCB überwacht die Ströme und/oder Spannungen an den Ports B1 und B2 und kann damit, wie oben bereits erläutert, erkennen, ob ein Fehler in dem Netzwerk 11 vorliegt und ob dementsprechend einer oder beide Ports B1 und B2 mit dem jeweils ausgewählten Port A1 oder A2 verbunden werden sollen. Außerdem kann, wie später noch näher erläutert wird, die zweite Steuereinheit RMCB erkennen, ob der Fehler in dem Netzwerk 11 behoben wurde und dementsprechend die Schalter RMS2 und RMS3 betätigen.

Die übergeordnete Steuerung RMC ist mit beiden Steuereinheiten RMCA und RMCB verbunden und verfügt über eine Kommunikationsschnittstelle RMI, hier ein PROFIBUS-Slave-Interface, zum Anschluss an den jeweils ausgewählten Port A1 oder A2. Dadurch kann der Redundanzmanager RM mit dem übergeordneten Leitsystem 1 kommunizieren, um beispielsweise Statusinformationen zu übermitteln, damit im Fehlerfall geeignete Maßnahmen zur Behebung des Fehlers ergriffen werden können, oder um Konfigurationsbefehle zu empfangen.

Ebenso wie der Redundanzmanager RM verfügen auch die Abzweigelemente T1...T4 über zuschaltbare Abschlussglieder, die dann, wenn sie sich am Linienende der linienförmigen Topologie befinden, zugeschaltet werden, um Signalreflexionen am Linienende zu vermeiden. Im fehlerfreien Fall ist in dem anhand Figur 1 erläuterten Beispiel das Abschlussglied BT2 in dem Redundanzmanager RM an dem Port B2 zugeschaltet; das Abschlussglied BT1 ist von dem zugehörigen Port B1 getrennt. Tritt ein Fehler, wie er durch die Unterbrechung 12 beispielhaft erläutert wurde, auf, so trennt der Redundanzmanager RM das Abschlussglied BT2 von den dem Port B2 und die beiderseits des Fehlerorts liegenden Abzweigelemente T1 und T3 aktivieren ihr jeweiliges Abschlussglied. Damit werden auch bei einer Verschiebung der Linienenden Signalreflexionen wirkungsvoll unterdrückt.

Der Abschluss des Kabels mit je einem Abschlusswiderstand an beiden Enden des Hauptkabels ist aus mehreren Gründen erforderlich:
1. Das Bussignal ist als Stromsignal mit ±10 mA definiert, welches über die Abschlusswiderstände mit zwei parallel geschalteten 100 Ohm-Widerständen, die einem 50 Ohm-Widerstand entsprechen, einen definierten Spannungsabfall von ±0,5 V erzeugt.
2. Die maximale Echolaufzeit im Kabel vom ca. 20 µs liegt bei 2 km Kabellänge in der Größenordnung einer Signalhalbwelle mit ca. 16 µs, so dass starke Reflexionen zu Bitfehlern führen würden. Die Überlappungen sollten nach höchstens 20% der Dauer einer Halbwelle abgeklungen sein, entsprechend einer Leitungslänge von weniger als 300 m. Dementsprechend sind laut IEC-Norm nur Stichleitungen bis max. 120 m Länge erlaubt, bei eigensicheren Netzen bis max. 30 m Länge.

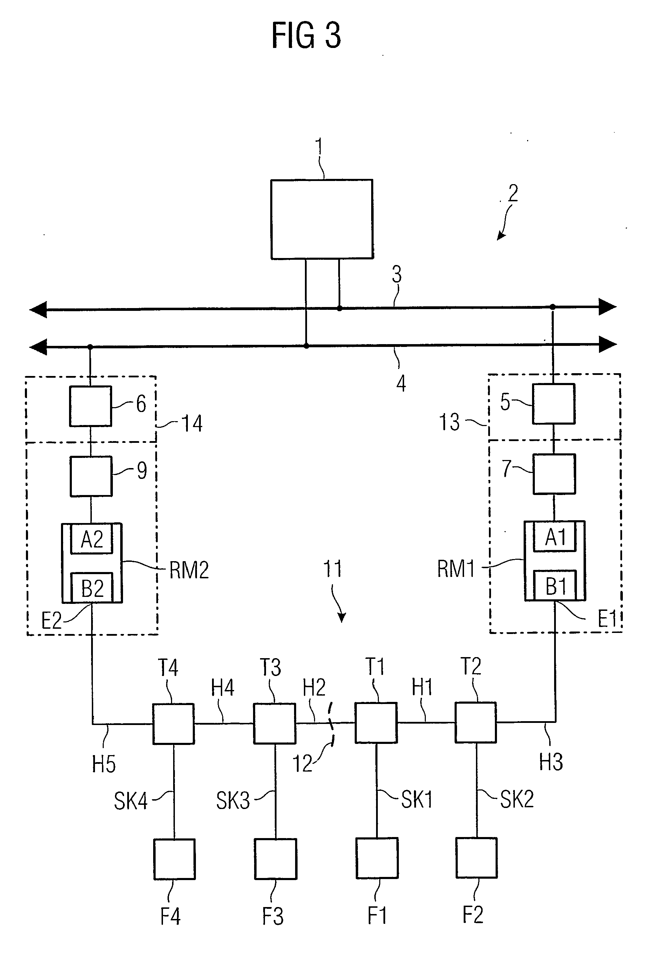

Figur 3 zeigt eine Ausführungsvariante der automatisierungstechnischen Anlage nach Figur 1, bei der der Redundanzmanager RM zweiteilig ausgeführt ist. Der eine Redundanzmanagerteil RM1 weist die Ports A1 und B1 auf, mit denen er an dem Segmentkoppler 7 bzw. an dem Linienende E1 des Netzwerkes 11 angeschlossen ist. Der andere Redundanzmanagerteil RM2 weist die Ports A2 und B2 auf, mit denen er an dem Segmentkoppler 9 bzw. an dem Linienende E2 des Netzwerkes 11 angeschlossen ist. Wie gestrichelt angedeutet ist, können der Redundanzmanager RM1 und der zugehörige Segmentkoppler 7 einschließlich der in ihm enthaltenen Gleichspannungsquelle und ggf. der Link 5 in einem ersten Bauteil 13 und der andere Redundanzmanager RM2 mit dem Segmentkoppler 9 und der zugehörigen Gleichspannungsquelle und ggf. dem Link 6 in einem zweiten Bauteil 14 zusammengefasst sein. Das hier gezeigte Ausführungsbeispiel weist den Vorteil auf, dass das Netzwerk 11 selbst nicht ringförmig aufgebaut sein muss, weil der Ring nicht an den Linienenden E1 und E2 sondern über die Redundanzmanagerteile 13, 14, die Segmentkoppler 7, 9, die Links 5, 6 und das Bussystem 2 geschlossen wird.

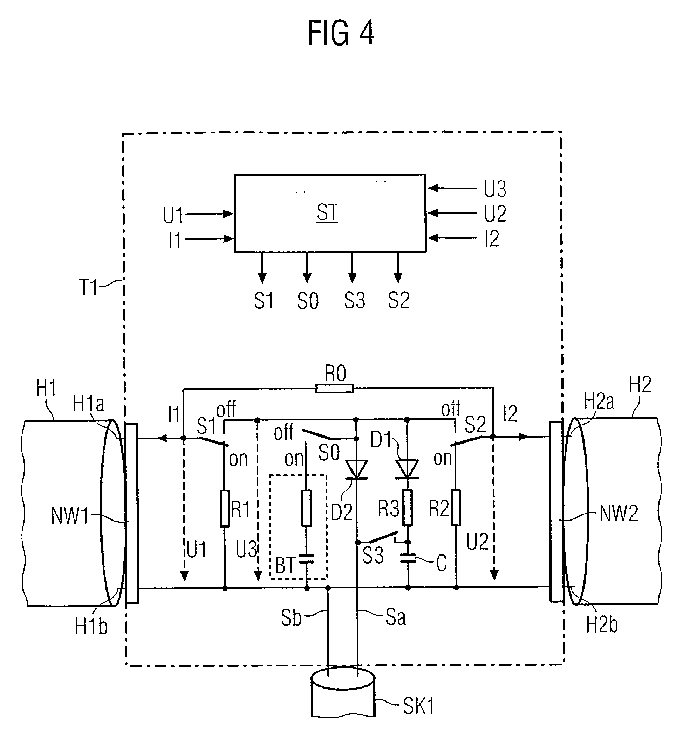

Der prinzipielle Aufbau eines Abzweigelements wird im Folgenden anhand des Beispiels des Abzweigelements T1 in Figur 4 näher erläutert. Das Abzweigelement T1 stellt die Verbindung zwischen den Aderpaaren der auch als Trunk Cable bezeichneten Hauptkabel H1 und H2 und denen des auch als Drop Cable bezeichneten Stichkabels SK1 her. Die Hauptkabel H1 und H2 sind an Netzwerkanschlüssen NW1 bzw. NW2 des Abzweigelements T1 angeschlossen. Neben den Daten werden über zwei Kupferadern H1a und H1b, H2a und H2b, sowie Sa und Sb der Kabel H1, H2 bzw. SK1 auch die Energie zum Betreiben der Feldgeräte übertragen. Hierzu enthalten, wie bereits erwähnt, die Segmentkoppler 7 und 9 (vgl. Figuren 1 und 3) jeweils eine Gleichspannungsquelle, wobei der durch den Redundanzmanager RM ausgewählte Segmentkoppler 7 einen Gleichstrom in die beiden Adern des Übertragungskabels einspeist. Die Feldgeräte F1...F4 entnehmen jeweils einen Gleichstromanteil und überlagern der Gleichspannung eine Wechselspannung, welche die zu übertragende Information enthält. Das Abzweigelement T1 weist eine Steuereinheit ST auf, welche mit Hilfe von Strömen I1, I2 und/oder Spannungen U1, U2, die an den Hauptkabeln H1 und H2 gemessen werden, den Zustand der angeschlossenen Kabel H1 und H2 überwacht und außerdem die Spannung U3 an dem zu dem Feldgerät F1 führenden Stichkabel SK1 überwacht. Weiterhin enthält das Abzweigelement T1 ein Abschlussglied BT, vier Schalter S0, S1, S2 und S3, ein Widerstandsnetzwerk bestehend aus Widerständen R0, R1 und R2 zur Spannungsmessung und einen Energiespeicher C in Form eines Kondensators. Die Stellung der Schalter S0...S3 wird durch die Steuereinheit ST in Abhängigkeit von den erfassten Strömen I1 und I2 und/oder von den gemessenen Spannungen U1, U2 und U3 vorgegeben. Das Abschlussglied BT, das mit Hilfe des Schalters S0 für den Fall, dass sich das Abzweigelement T1 an einem Linienende befindet, zuschaltbar ist, entspricht einem Standard-Abschlusswiderstand des PROFIBUS PA-Bussystems. Die Größe der Widerstände R0, R1 und R2 ist so gewählt, dass der Zustand der angeschlossenen Kabel H1 und H2 optimal ermittelt werden kann. Sie sind dabei vorzugsweise so hochohmig ausgelegt, dass der über sie fließende Strom sehr klein im Vergleich zu dem Strom ist, welcher im normalen Betrieb über die Kabel H1 und H2 fließt. In diesem Fall sind die Leitungswiderstände der Kabel H1 und H2 vernachlässigbar klein.

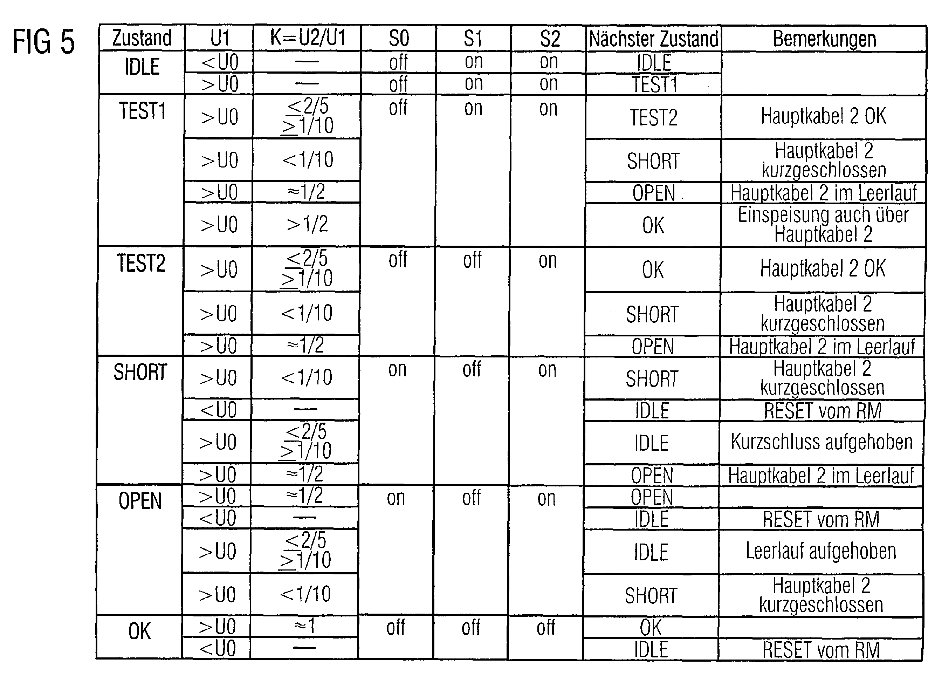

Anhand der in Figur 5 dargestellten Zustandstabelle für die Steuereinheit ST des Abzweigelements T1 wird im Folgenden die Funktionsweise der Abzweigelemente T1...T4 näher erläutert. Der Einfachheit halber wird angenommen, dass die drei Widerstände R0, R1 und R2 denselben Widerstandwert besitzen. Von links beginnend sind in den Spalten der Tabelle der aktuelle Zustand der Steuereinheit ST, Prüfkriterien für einen Zustandswechsel bezüglich der Spannung U1 und eines Spannungsverhältnisses K = U2/U1, die Stellungen der Schalter S0, S1 und S2, der nächste Zustand und Bemerkungen zum jeweiligen Fall eingetragen. Der in der Tabelle angegebene Zustand IDLE entspricht dem Grundzustand, der angenommen wird, wenn beide Hauptkabel H1 und H2 keine Spannung führen; d. h. die überprüften Spannungen U1 und U2 sind gleich Null oder zumindest kleiner als eine Vergleichsspannung U0, die in geeigneter Weise abhängig von der jeweiligen Speisespannung festzulegen ist. Entsprechendes gilt für einen Vergleichsstrom I0, mit welchem die Ströme I2 und I1 verglichen werden können. In diesem Zustand sind die Schalter S1 und S2 in der Stellung "on", wie es in der Tabelle in den zu den Schaltern S1 und S2 gehörenden Spalten in der jeweiligen Zeile des Zustands IDLE angegeben ist. Da der Zustand IDLE beibehalten wird, ist in der Spalte "nächster Zustand" wiederum der Zustand IDLE für diesen Fall angegeben. In der Spalte "K = U2/U1" sind Beispiele für das Spannungsverhältnis zwischen den Spannungen U2 und U1 angegeben, deren Über- oder Unterschreiten durch die Steuereinheit ST überwacht wird. Je nach Ergebnis des Vergleichs wird von einem aktuellen Zustand in einen nächsten Zustand übergegangen. Beispielsweise bedeutet der Eintrag in der Spalte "K = U2/U1" der ersten Zeile des Zustands TEST1, dass in den Folgezustand TEST2 übergegangen wird, wenn das Spannungsverhältnis K zwischen 1/10 und 2/5 liegt. Die Festlegung der Vergleichswerte, hier z. B. 1/10 und 2/5, mit denen das aktuell durch die Steuereinheit ST ermittelte Spannungsverhältnis K verglichen wird, ist von verschiedenen Randbedingungen, insbesondere der Größe der Widerstände R0, R1 und R2, abhängig und hier nur beispielhaft angegeben. Beim Einschalten einer Speisespannung US im Segmentkoppler 7 (Figuren 1 und 3) wird diese Spannung über den Redundanzmanager RM, das Abzweigelement T2 und das Hauptkabel H1 dem Netzwerkanschluss NW1 des Abzweigelements T1 zugeführt und es gilt U1 = US > U0. Die Steuereinheit ST geht daher aus dem Zustand IDLE in den Zustand TEST1 über und misst die beiden Spannungen U1 und U2. Ist das Hauptkabel im darauf folgenden Segment, hier das Hauptkabel H2, kurzgeschlossen, so wird der Spannungsabfall über dem Widerstand R0 sehr viel größer sein als die am Netzwerkanschluss NW2 bzw. am Kabel H2 messbare Spannung U2; d. h. K = U2/U1 < 1/10. Dies entspricht der zweiten Zeile des Zustands TEST1 in der Tabelle. Aufgrund dieses Überprüfungsergebnisses wird als nächster Zustand der Zustand SHORT angenommen. In diesem Fall bleibt der Schalter S2 in der Stellung "on" und das kurzgeschlossene Hauptkabel H2 ist von dem davor liegenden Kabelsegment, dem Hauptkabel H1, getrennt. Die Verbindung über den hochohmigen Widerstand R0 kann hierbei außer Acht gelassen werden. Gleichzeitig wird das so entstandene Linienende durch Umschalten des Schalters S0 auf die Stellung "on" über das Abschlussglied BT mit korrektem Wellenwiderstand abgeschlossen.

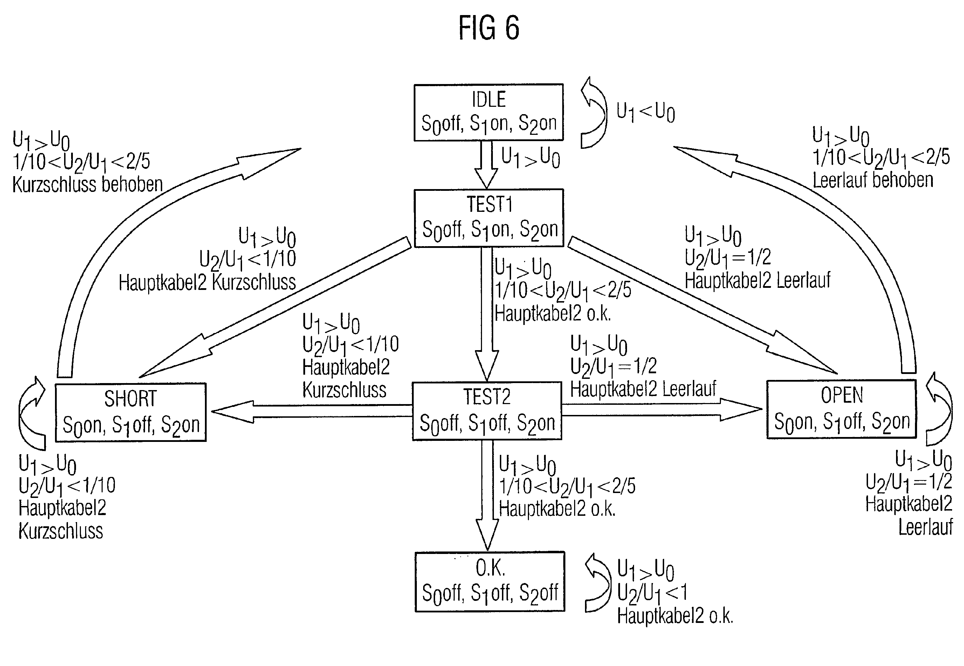

Entsprechend der ersten Zeile des Zustands TEST2 wird aus diesem heraus in den Zustand OK gewechselt, wenn das Spannungsverhältnis K zwischen 1/10 und 2/5 liegt. In dem Zustand OK sind die Schalter S0, S1, S2 in der Stellung "off" und beide an das Abzweigelement T1 angeschlossenen Hauptkabel H1 und H2 in Ordnung. Weitere Fallunterscheidungen und Zustandsübergänge, die sich bei den verschiedenen Messungen der Spannungen U1 und U2 durch die Steuereinheit ST ergeben, sind dem Zustandsdiagramm in Figur 6 zu entnehmen.

In dem oben erläuterten Beispiel wurde die Speisespannung dem Abzweigelement T1 über das Hauptkabel H1 zugeführt. Erfolgt diese Zuführung alternativ über das Hauptkabel H2, so kann die zugehörige Zustandstabelle in einfacher Weise dadurch erhalten werden, dass die Indizes bei den Spannungen U1 und U2 vertauscht werden.

Die Zustände SHORT (Hauptkabel H2 im Kurzschluss) und OPEN (Hauptkabel H2 im Leerlauf) sind Fehlerzustände, die zur Einspeisung der Speisespannung durch den Redundanzmanager RM über beide Ports B1 und B2 führen. Wird der jeweilige Fehler behoben, so wird das betroffene Abzweigelement T1 zunächst in den Zustand IDLE geschaltet. Da der Schalter S0 dabei in der Stellung "off" ist, ist das beiderseits gespeiste linienförmige Netzwerk 11 ohne Leitungsabschluss. Dies führt zu einer Erhöhung der Signalamplitude, was durch die zweite Steuereinheit RMCB des Redundanzmanagers RM detektiert wird und diese dazu veranlasst, den Schalter RMS3 zu öffnen und so die Spannungseinspeisung an dem Port B2 wieder aufzuheben. Aufgrund des nun fehlerfreien Netzwerkes 11 wird über den Zustand TEST1 der eigentliche Betriebszustand OK erreicht.

In dem beschriebenen Ausführungsbeispiel wird zur Ermittlung des Zustands des zu überwachenden Kabelsegments das Verhältnis von Ausgangs- und Eingangsspannung des Abzweigelements verwendet. Stattdessen kann dieser Zustand aber z. B. auch aus den Absolutwerten der Spannungen und der Ströme ermittelt werden.

Der in Figur 4 gezeigte Kondensator C dient dazu, eine unterbrechungsfreie Spannungsversorgung des an dem Abzweigelement T1 angeschlossenen Teilnehmergeräts F1 auch in der durch Schaltverzögerungen verursachten Zeitspanne zwischen dem Auftreten eines Fehlers und der Herstellung der alternativen Energieversorgung sicherzustellen. Der Kondensator C wird dazu in der Betriebsphase, wenn mindestens einer der Schalter S1, S2 in der Stellung "off" ist, über eine Entkopplungsdiode D1 und einen Ladewiderstand R3 mit der Speisespannung aufgeladen. Die Steuereinheit ST überwacht die an dem Stichkabel SK1 zu dem Teilnehmergerät F1 liegende Spannung U3 und schaltet den Kondensator C über den Schalter S3 an das Stichkabel SK1, wenn sie eine zu niedrige Spannung U3 detektiert. Die Entkopplungsdiode D1 und eine weitere Entkopplungsdiode D2 verhindern einen Energierückfluss in das Netzwerk 11.

Es kann manuell oder automatisch ein RESET des Systems ausgelöst werden, indem der Redundanzmanager RM die Speisespannung an den Ports B1 und B2 kurzzeitig abschaltet, woraufhin über den Zustand IDLE ein neuer Prüfzyklus mit Durchlaufen der Zustände TEST1 und TEST2 einleitet wird.

Die beschriebene Ausgestaltung eines Netzwerks hat die Vorteile, dass die Abzweigelemente ihre vergleichsweise geringe Betriebsenergie dem Hauptkabel entnehmen können, die Steuereinheiten ST der Abzweigelemente autark arbeiten und der Signalpfad passiv ausgeführt werden kann, da sich lediglich Widerstände und Schalter zwischen den Netzwerkanschlüssen der Abzweigelemente befinden. Eine aktive Lösung, beispielsweise mit einer Signalauffrischung wie bei Repeatern, ist jedoch auch möglich.

In Figur 6 sind die Zustände und Zustandsübergänge der Tabelle aus Figur 5 zur besseren Anschaulichkeit noch einmal in Form eines Zustandsdiagramms dargestellt, welches dasselbe Verhalten der Steuereinheit ST wie die Tabelle beschreibt. Für alle Zustände gilt: Bei U1 < U0 erfolgt ein RESET durch den Redundanzmanager RM und es wird mit dem Zustand IDLE begonnen.

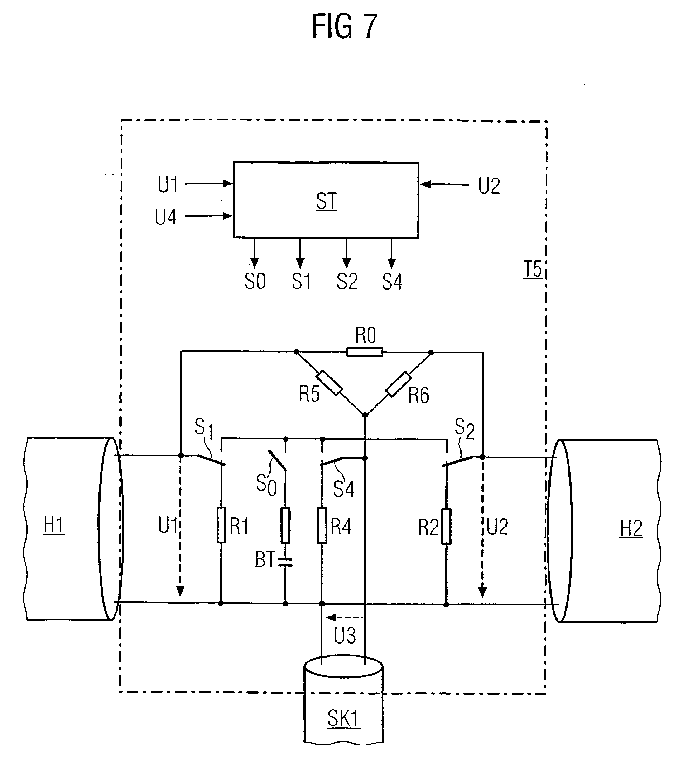

Bei dem oben beschriebenen Ausführungsbeispiel wird ein Kurzschluss im Stichkabel SK1 nicht beherrscht. Es lässt sich aber in einfacher Weise so erweitern, dass alle an einem Abzweigelement angeschlossenen Kabel überwacht werden können. Figur 7 zeigt ein Prinzipschaltbild eines derart erweiterten Abzweigelements T5, das gegenüber dem anhand Figur 4 erläuterten Abzweigelement T1 um einen Schalter S4 und Widerstände R4, R5 und R6 ergänzt wurde. Das Prinzip der Überwachung von drei Kabeln ist analog zur oben beschriebenen Überwachung von zwei Kabeln und erschließt sich daher für den Fachmann anhand von Figur 7 von selbst.

Im beschriebenen Ausführungsbeispiel sind die Abzweigelemente getrennt von den Feldgeräten aufgebaut und mit diesen jeweils lediglich über ein Stichkabel verbunden. Abweichend hiervon kann ein Abzweigelement alternativ in das Gehäuse des jeweiligen Feldgeräts integriert werden.

Alternativ zu den in Figur 4 dargestellten Abzweigelementen mit Stichkabelanschluss ist es möglich, diese ohne Stichkabelanschluss auszuführen oder kein Stichkabel anzuschließen. Dies ermöglicht es, die Netzwerklinie in vorgegebene Liniensegmente aufzuteilen, die individuell überwacht werden können. Fehler lassen sich so einfacher lokalisieren und beheben.

Eine weitere Alternative ist es, die Abzweigelemente mit mehreren Stichkabelanschlüssen für Feldgeräte auszustatten.

Wenn nach der Ermittlung des Fehlerortes der Fehler repariert werden soll, können instabile Zustände, beispielsweise in Form von Wackelkontakten, auftreten, durch die der Anlagenbetrieb beeinträchtigt wird. Um dies zu vermeiden kann vorgesehen werden, die Zustände an den Netzwerkanschlüssen des Abzweigelements zu fixieren, was beispielsweise durch Kurzschlussstecker geschehen kann, die nach der Reparatur wieder entfernt werden. Diese Zustandsfixierung kann bei entsprechender Auslegung auch zum gezielten Abschalten einzelner Kabelsegmente verwendet werden und erleichtert dadurch Wartungsarbeiten im explosionsgefährdeten Bereich. Dabei besteht die Möglichkeit, die Klemmen der Netzwerkanschlüsse, an denen nicht gearbeitet werden darf, mechanisch abzudecken, wobei die Abdeckung so gestaltet sein kann, dass bei ihrer Entfernung der oben erwähnte und die Entstehung zündfähiger Funken verhindernde Kurzschluss hergestellt wird.

## Patentansprüche

1. Verfahren zum Betreiben eines Netzwerks, insbesondere eines PROFIBUS PA-Netzwerks, mit Redundanzeigenschaften, wobei die Topologie des Netzwerks (11) eine Linie (H1...H5) aufweist und die beiden Linienenden (E1, E2) an einem Redundanzmanager (RM) angeschlossen sind, der dazu ausgebildet ist, im fehlerfreien Fall die beiden Linienenden (E1, E2) voneinander zu trennen und im Fehlerfall die beiden Linienenden (E1, E2) miteinander zu verbinden, **dadurch gekennzeichnet, dass** durch den Redundanzmanager (RM) in eines der Linienenden (E1, E2) eine Speisespannung zum Betrieb von mit jeweils einem Abzweigelement (T1...T4) an das Netzwerk (11) angeschlossenen Teilnehmergeräten (F1...F4) eingespeist wird, dass jedes Abzweigelement (T1...T4) nach Erhalt einer Speisespannung an seinem einen Netzwerkanschluss (NW1) den Zustand des am jeweils anderen Netzwerkanschluss (NW2) angeschlossenen Kabels (H2) überprüft und die Speisespannung nur bei fehlerfreiem Zustand auf dieses Kabel (H2) weiterleitet, und dass der Redundanzmanager (RM) in das andere der Linienenden (E1, E2) ebenfalls eine Speisespannung einspeist, wenn zumindest eine vorbestimmte Zeitdauer nach Einspeisen der Speisespannung in das eine Linienende keine Speisespannung am anderen Linienende durch den Redundanzmanager (RM) detektiert wird.

## Claims

1. Method for operating a network, in particular a PROFIBUS PA network having redundant properties, with the topology of the network (11) having a line (H1...H5) and the two line ends (E1, E2) being connected to a redundancy manager (RM) which is embodied to disconnect the two line ends (E1, E2) in error-free conditions and to connect the two line ends (E1, E2) to one another in error conditions, **characterised in that** the redundancy manager (RM) in one of the line ends (E1, E2) supplies a supply voltage for operating subscriber devices (F1...T4), which are connected to the network (11) by a branching unit (T1...T4) in each instance, such that each branching unit (T1...T4), after receiving a supply voltage on its one network connection (NW1), checks the state of the cable (H2) which is connected to the other network connection (NW2) in each instance and transmits the supply voltage to this cable (H2) only in the error-free condition and that the redundancy manager (RM) likewise supplies a supply voltage into the other of the line ends (E1, E2) if no supply voltage is detected on the other line end by the redundancy manager (RM) after supplying the supply voltage into the one line end for at least a predetermined period of time.

## Revendications

1. Procédé pour faire fonctionner un réseau, notamment un réseau PROFIBUS PA, ayant des propriétés de redondance, dans lequel la topologie du réseau (11) a une ligne (H1...H5) et les deux extrémités (E1, E2) de la ligne sont raccordées à un gestionnaire (RM) de redondance qui est constitué pour, dans le cas où il n'y a pas d'erreurs, séparer l'une de l'autre les deux extrémités (E1, E2) de la ligne et, dans le cas où il y a erreur, relier entre elles les deux extrémités (E1, E2) de la ligne, **caractérisé en ce que** par le gestionnaire (RM) de redondance il est injecté dans l'une des extrémités (E1, E2) de la ligne une tension d'injection pour le fonctionnement d'appareils (T1...T4) participants, raccordés au réseau (11) par respectivement un élément (T1...T4) de dérivation, **en ce que** chaque élément (T1...T4) de dérivation contrôle, après avoir reçu une tension d'injection sur l'une de ses bornes (NW1) de réseau, l'état du câble (H2) raccordé à respectivement l'autre borne (NW2) de réseau et n'achemine la tension d'injection sur ce câble (H2) qu dans le cas sans défaut et **en ce que** le gestionnaire (RM) de redondance injecte également une tension d'injection dans l'autre des extrémités (E1, E2) de ligne, lorsque, pendant au moins un laps de temps déterminé à l'avance après l'injection de la tension d'injection dans l'une des extrémités de ligne, une tension d'injection n'est pas détectée sur l'autre extrémité de ligne par le gestionnaire (RM) de redondance.
